Europäisches Patentamt

European Patent Office

Office européen des brevets

(19)

(11) Veröffentlichungsnummer: **0 220 449**
**B1**

(12) **EUROPÄISCHE PATENTSCHRIFT**

(45) Veröffentlichungstag der Patentschrift: **28.11.90**

(51) Int. Cl.[5]: **G 06 F 12/06**, G 06 F 12/10

(21) Anmeldenummer: **86112594.6**

(22) Anmeldetag: **11.09.86**

(54) Schaltungsanordnung zur Transformation von 2n in einem Leittechniksystem mit mehreren Teilnehmern verwendeten globalen Adressen in 2m in einem der Teilnehmer des Systems verwendeten lokalen Adressen.

(30) Priorität: **18.10.85 CH 4493/85**

(43) Veröffentlichungstag der Anmeldung:
**06.05.87 Patentblatt 87/19**

(45) Bekanntmachung des Hinweises auf die
Patenterteilung:
**28.11.90 Patentblatt 90/48**

(84) Benannte Vertragsstaaten:
**CH DE FR GB LI SE**

(56) Entgegenhaltungen:
**US-A-4 279 014**

**ELECTRONICS ET APPLICATIONS INDUSTRIELLES, Nr. 251, April 1978, Seite 21, Paris, FR; C. BARRE: "Des circuits puissants et simples d'emploi la famille des FPLA et l'exploitation pratique des circuits"**

**IBM TECHNICAL DISCLOSURE BULLETIN, Band 22, Nr. 7, Dezember 1979, Seiten 2883,2884, New York, US; K. MARTON et al.: "Memory adressing scheme for loosely coupled processors"**

(73) Patentinhaber: **BBC Brown Boveri AG**
**Haselstrasse**
**CH-5401 Baden (CH)**

(72) Erfinder: **Züger, Stefan**
**Martinsbergstrasse 24**
**CH-5400 Baden (CH)**

**Beschreibung**

Die Erfindung betrifft eine Schaltungsanordnung gemäss dem gemeinsamen Oberbegriff der Patentansprüche 1 und 2.

In verteilten Leittechniksystemen mit einer Vielzahl von Teilnehmern, welche nach dem Prinzip der Quellenadressierung arbeiten, ist der einzelne Teilnehmer in der Regel nur an einer Untermenge der über das System übertragene Nachrichten interessiert. Aus der Sicht des einzelnen Teilnehmers ist deshalb der Quelladressraum, welcher alle für das Leittechniksystem globalen Adressen umfasst, nur sehr schwach belegt. Um in dem einzelnen Teilnehmer eine ökonomische Ausnutzung des zur Kommunikation mit den übrigen Teilnehmern des Leittechniksystem erforderlichen Kommunikationsspeichers zu erzielen, wird für die interne Referenzierung und Speicherung der Kommunikationsdaten ein kleinerer als der Quelladressraum verwendet. Dies hat zur Folge, dass der Quelladressraum in den internen Adressraum des einzelnen Teilnehmers transformiert werden muss. Die Transformation ist für jeden einzelnen Teilnehmer durch eine eigene Transformationsfunktion festgelegt. Diese ordnet jeder globalen Adresse des Quelladressraums, die vom Teilnehmer benutzt wird, eindeutig jeweils eine eigene, lokale, interne Adresse und allen übrigen globalen Adressen des Quelladressraums, die vom Teilnehmer nicht benutzt werden, eine gemeinsame lokale interne Adresse zu. Die Transformationsfunktion ist daher eine diskrete Funktion.

Eine Schaltungsanordnung der gattungsgemässen Art ist aus US—A—4 279 014 bekannt. Bei dieser Schaltungsanordnung wird die Transformation des Quelladressraumes in den internen Adressraum des einzelnen Teilnehmers in mehreren Schritten durchgeführt. Bei jedem Schritt wird hierbei ein Teil der globalen Adresse verarbeitet, indem ausgehend von einer mindestwertigen Teiladresse zu der höchstwertigen Teiladresse die Resultate der einzelnen Transformationsschritte zur nachfolgenden Teiladresse addiert werden. Die einzelnen Transformationsschritte beinhalten ein Suchverfahren in Tabellen. Durch ein derartiges Suchen kann die maximale Transformationszeit gegebenenfalls jedoch sehr gross werden, wodurch die übertragbare Datenendrate in einer häufig nicht mehr tolerierbaren Weise begrenzt wird.

Es ist ferner bekannt, diskrete Transformationsfunktionen mittels einer vollständigen Funktionstabelle, die in einem Speicher abgelegt ist, zu berechnen. Diese Methode ist sehr schnell, denn beim Anlegen des Arguments der Funktion, d.h. der globalen Adresse an die Adresseingänge des Speichers, erscheint an dessen Datenausgängen unmittelbar als zugehöriger Funktionswert die gewünschte lokale Adresse. Zur vollständigen Tabellierung der Transformationsfunktion ist jedoch ein Speicherbedarf von $N[\log_2 M]$ Bit erforderlich, wobei N die Grösse des Quelladressraumes, M die Grösse des internen Adressraumes bezeichnet und durch die speziellen Klammern [ ] angedeutet sein soll, dass das von ihnen Eingeklammerte auf die nächstgrössere ganze Zahl aufgerundet werden soll. In einem für heutige Anwendungen typischen System mit $N = 2^{24}$ und $M = 2^8$ würde ein Speicherbedarf von 16777216 . 8 Bit resultieren. Zur Realisierung eines solchen Speichers z.B. mit derzeit kostengünstigen Speicherbausteinen von 8K . 8 Bit wären übe 2000 Speicherbausteine erforderlich, was einen nicht mehr praktikablen Aufwand bedeutet.

Aufgabe der Erfindung ist es, eine Schaltungsanordnung de eingangs genannten Art anzugeben, welche einerseits mit wesentlich weniger Speicherbedarf auskommt als für eine vollständige Tabellierung der Transformationsfunktion erforderlich ist und welche andererseits die Transformation erheblich schneller als durch Durchsuchen einer nur die vom Teilnehmer benutzten globalen Adressen enthaltenden Liste ausführen kann. Diese Aufgabe wird erfindungsgemäss durch die Merkmale des Anspruch 1 oder die Merkmale des Anspruchs 2 gelöst.

Der Speicherbedarf der erfindungsgemässen Schaltungsanordnungen ist bei einer Grösse des Quelladressraum von $N = 2^{24}$ und des internen Adressraums von $M = 256$ um mehr als 2000 mal kleiner als bei der bekannten Lösung der vollständigen Tabellierung der Transformationsfunktion. Die erfindungsgemässen Lösungen sind darüber hinaus um einen Faktor 20 bis 100 schneller als die Lösung, lediglich die benutzten globalen Adressen zusammen mit ihren lokalen Adressen in einer Liste zu führen und diese Liste zu durchsuchen.

Im folgenden wird jeweils ein Ausführungsbeispiel der beiden erfindungsgemässen Schaltungsanordnungen anhand der Zeichnung erläutert. Es zeigt:

Fig. 1 eine Schaltungsanordnung mit mehreren Speichern zur Speicherung jeweils einer Teilfunktion und

Fig. 2 eine Schaltungsanordnung, welche zur Speicherung der Teilfunktionen lediglich einen einzigen Speicher enthält.

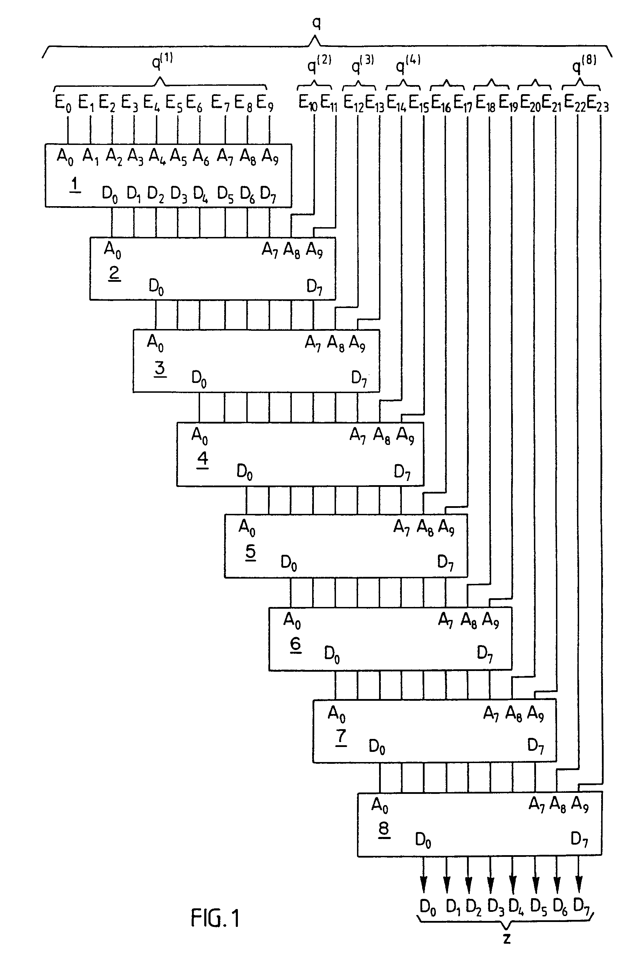

In Fig. 1 sind acht mit 1 bis 8 bezeichnete Speicher dargestellt, welche jeweils eine Teilfunktion enthalten, wobei die Funktionswerte der im Speicher 8 enthaltenen Teilfunktion die lokalen Adressen sind. An adresseingänge $A_0$ bis $A_9$ des Speichers 1 sind die zehn niederwertigsten, für sich die Teiladress $q^{(1)}$ bildenden Bits $E_0$ bis $E_9$ der mit q bezeichneten lokalen Adresse, die aus den 24 Bists $E_0$ bis $E_{23}$ besteht, angeschlossen. Die acht Datenausgänge $D_0$ bis $D_7$ des Speichers 1 sind an erste der Adresseingänge $A_0$ bis $A_9$ des Speichers 2, nämlich an die Adresseingänge $A_0$ bis $A_7$ angeschlossen. An die übrigen, zweiten der Adresseingänge $A_0$ bis $A_9$ des Speichers 2, nämlich an die Adresseingänge $A_8$ und $A_9$, sind die in der Folge von den niederwertigen zu den höherwertigen Bits auf die Teiladresse $q^{(1)}$ folgenden beiden Bits $E_{10}$ und $E_{11}$ der globalen Adresse q angeschlossen. Diese beiden Bits $E_{10}$ und $E_{11}$ bilden für sich die Teiladresse $q^{(2)}$. In

2

gleicher Weise wie der Speicher 2 an den Speicher 1 sowie an die Teiladresse $q^{(2)}$ angeschlossen ist, ist der Speicher 3 an den Speicher 2 sowie eine Teiladresse $q^{(3)}$, der Speicher 4 an den Speicher 3 sowie an eine Teiladresse $q^{(4)}$ usw. bis zum Speicher 8 angeschlossen. Die acht Speicher 1 bis 8 sind demnach derart hintereinandergeschaltet, dass bis auf den in der Reihenfolge letzten Speicher 8 jeweils ihre Datenausgänge $D_0$ bis $D_7$ an jeweils die ersten Adresseingänge $A_0$ bis $A_7$ ihrer jeweiligen Nachfolger angeschlossen sind. An den zweiten Adresseingängen $A_8$ und $A_9$ erhalten die Speicher 1 bis 8 jeweils zwei der Bits der globalen Adresse q. Die Aufteilung der Bits der globalen Adresse auf die einzelnen Speicher 1 bis 8 wird allgemein in folgender Weise vorgenommen: Bezeichnet n die Anzahl Bits der globalen Adresse q, m die Anzahl der Datenausgänge der Speicher — durch die gleichzeitig auch die Anzahl Bits der an den Datenausgängen des letzten Speichers abgreifbaren lokalen Adresse z gegeben ist — und k die Anzahl der Speicher, so werden am ersten Speicher der Reihenschaltung $s_1 = m + (n - m)/k$ Bits und an den weiteren Speichern jeweils $s_2 = s_3 = .. s_k = (n - m)/k$ Bits der globalen Adresse q angeschlossen. Im Beispiel von Fig. 1 ist diese Regel mist $s_1 = 10$ und $s_2 = s_3 = \ldots = s_8 Q = 2$ eingehalteten. Weiter wird die globale Adresse q von den niederwertigen zu den höherwertigen Bits aufeinanderfolgen in die Teiladressen $q^{(j)}$ zerlegt. Die Zerlegung der globalen Adresse q in die Teiladressen $q^{(j)}$ kann mathematisch daher auch durch

$$q^{(j)} = (q \bmod p_j \ \mathrm{div} \ p_{j-1}; \ j = 1, 2, \ldots, k$$

beschreiben werden, mit

$$P_j = \prod_{a=1}^{j} 2^{s_a} \quad \text{und } P_0 = 1,$$

wobei die $s_a$ die oben definierte Bedeutung haben. "mod" bedeutet die Modulo-Funktion und "div" die ganzzahlige Division. Als optimalen Wert für die Anzahl k Speicher sollte ein Wert von $k = 1/2 \ (n-m)$ gewählt werden. Auch diese Regel ist mit $k = 8$ im Beispiel von Fig. 1 eingehalten. Mit den vorstehenden Bemessungsvorschriften ergibt sich ein minimaler Speicherbedarf C, welcher für sämtliche Speicher zusammen $C = 2 \ (n-m) \ 2^m m$ Bit beträgt.

Mit der bechriebenen Schaltungsanordnung wird die globale Adresse q in die lokale Adresse z in acht — allgemein in k — Schritten transformiert, wobei jeder Schritt einen Speicherzykylus bedeutet. Beim ersten Schritt wird durch die Teiladresse $q^{(1)}$ im Speicher 1 ein Speicherplatz ausgewählt, dessen Inhalt an seinen Datenausgängen $D_0$ bis $D_7$ erscheint und damit gleichzeitig an den Adresseingängen $A_0$ bis $A_7$ des Speichers 2 anliegt. Beim zweiten Schritt wird über den im ersten Schritt ermittelten Inhalt der im Speicher 1 durch die Teiladresse $q^{(1)}$ ausgewählten Speicherzelle im Speicher 2 einer von $2^m$ Speicherbereichen mit 4 Speicherzellen — allgemeinin mit $2^{(n-m)/k}$ Speicherzellen — ausgewählt und von der Teiladresse $q^{(2)}$ innerhalb des ausgewählten Speicherbereiches eine der vier Speicherzellen, deren Inhalt dann an den Datenausgängen $D_0$ bis $D_7$ des Speichers 2 erscheint. Die Schritte 3 bis 8 sind analog zum Schritt 2. Damit beim achten Schritt an den Datenausgängen $D_0$ bis $D_7$ des Speichers 8 die gewünschte lokale Adresse z erscheint, müssen die in den Speichern 1 bis 8 abgespeicherten Teilfunktionen $w_j$ in folgender Beziehung zur Transformationsfunktion w stehen:

$$z = w(q) = w_{k(q}(k), \ w_{k-1(q}(k-1), \ \ldots, \ w_{1(q}(1)_{)\ldots)),}$$

wobei die $q^{(j)}$ die vorstehend definierten Teiladressen der globalen Adresse q sind. Die Funktionserte der Teilfunktion $w_1$ bis $w_7$, welche in den Speichern 1 bis 7 enthalten sind, sind anschaulich gesprochen Zeiger, und zwar Zeiger auf Speicherbereiche im jeweils nachgeordneten Speicher. Auch die Teiladressen $q^{(j)}$ können als Zeiger aufgefasst werden, welche auf eine ganz bestimmte Speicherzelle im dem von den Funktionswerten der Teilfunktionen ausgewählten Speicherbereichen zeigen. Die genannten Zeiger weisen praktische einen Weg zur jeweils richtigen lokalen Adresse z.

Zu jeder vorgegebenen Transformationsfunktion müssen die Werte der einzelnen Teilfunktionen so bestimmt werden, dass diese der vorgenannten Bedingung genügen. Ein Verfahren wie diese Werte, die schliesslich in die Speicher 1 bis 8 eingeschrieben werden müssen, ermittelt werden können, ist im folgenden angegeben.

I Sämtliche k Speicher sind zu löschen, d.h. es sind alle Speicherinhalte auf Null zu setzen.

II Begrinnend mit einer ersten der vom Teilnehmer benutzten globalen Adressen, z.B. der kleinsten dieser Adressen, wird diese in die Teiladressen $q^{(i)}$ bis $q^{(k)}$, wie oben beschrieben, zerlegt.

III Es wird geprüft, ob im Speicher 1 die durch die Teiladresse $q^{(i)}$ bestimmte Speicherzelle den Wert Null enthält.

Wenn ja wird IV,
wenn nein wird V ausgeführt.

IV Im Speicher 2 wird, beginnend mit dem Speicherbereich mit der zweit-kleinsten Adresse ein in allen Speicherzellen Null enthaltender Speicherbereich gesucht. Die Adresse des ersten auf diese Weise gefundenen, nut Nullen enthaltenden Speicherbereichs wird in die durch die Teiladresse $q^{(1)}$ bestimmte Speicherzelle im Speicher 1 eingetragen.

V Es wird geprüft, ob im Speicher 2 die durch die Teiladresse $q^{(2)}$ bestimmte Speicherzelle in demjenigen Speicherbereich Null enthält, welcher durch den Inhalt der unter III betrachteten Speicherzelle bestimmt ist.

Wenn ja wird VI,

wenn nein wird VII ausgeführt.

VI Im nachgeordneten Speicher wird, beginnend mit dem Speicherbereich mit der zweit-kleinsten Adresse, ein in allen Speicherzellen Null enthaltender Speicherbereich gesucht. Die Adresse des ersten auf diese Weise gefundenen, nur Nullen enthaltenden Speicherbereichs, wird in die vor Ausführung von VI auf ihren Ihalt geprüfte Speicherzelle im vorgeordneten Speicher eingetragen.

VII Es wird geprüft, ob im nachgeordneten j-ten Speicher die durch die Teiladresse $q^{(j)}$ bestimmte Speicherzelle in dem durch den Inhalt der vor Ausführung von VII auf ihren Inhalt geprüften Speicherzelle im vorgeordneten Speicher bestimmten Speicherbereich Null enthält und ob j kleiner als k ist.

Wenn der Inhalt der Speicherzelle Null und j kleiner k ist wird VI,

wenn der Inhalt der Speicherzelle, von Null verschieden und j kleiner k ist wird VII ausgeführt,

wenn j gleich k ist wird zur betrachteten globalen Adresse zugehörige interne Adresse in die betreffende Speicherzelle eingetragen.

VIII Die Verfahrensschritte II bis VII werden für alle übrigen der vom Teilnehmer benutzten globalen Adressen durchgeführt.

Durch das vorstehend erläuterte Verfahren wird den vom Teilnehmer nicht benutzten globalen Adressen automatisch die Adresse Null als die für diese globalen Adressen gemeinsame lokale Adresse zugeordnet. Selbstverstänlich könnte also gemeinsame lokale Adresse auch eine andere Adresse, wie z.B. die Adresse 255 verwendet werden, die dann allerdings noch in sämtliche, Nullen enthaltenden Speicherplätze des k-ten Speichers einzuschreiben wäre.

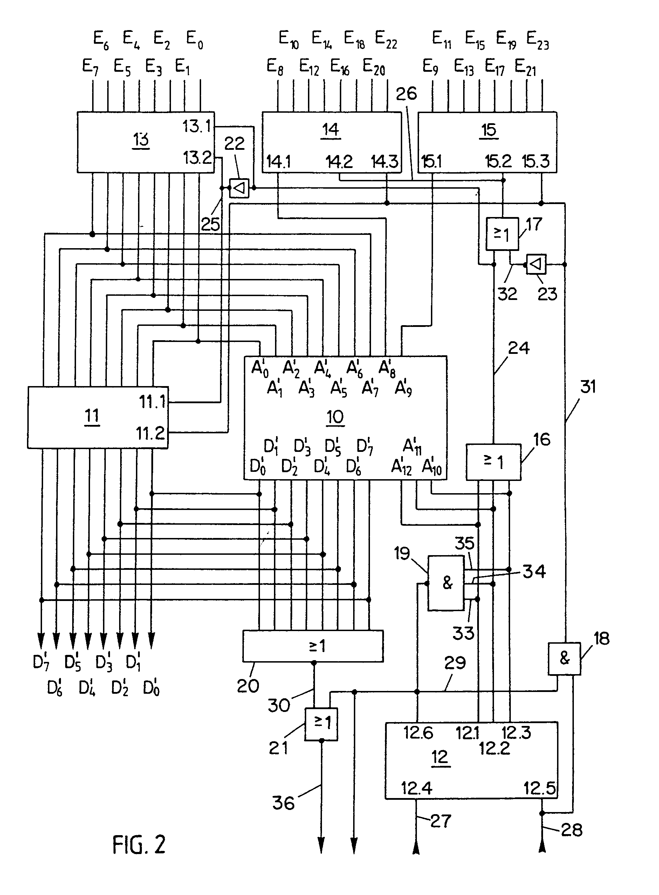

Da die Speicherkapazität moderner Speicherbausteine in der Regel ausreicht, mehrere der k-Teilfunktionstabellen gleichzeitig aufzunehmen, im bisher gewählten Beispiel mit n = 24, m = 8 und k = 8 sogar sämtliche acht Teilfunktionstabellen, wird es sich häufig als günstigere Lösung erweisen, weniger als k Speicher, vorzugsweise sogar nur einen einzigen Speicher zu verwenden. Eine solche Schaltungsanordnung mit nur einem Speicher wird nunmehr anhand von Fig. 2 erläutert.

In dem einen Speicher 10 sollen sämtliche Teilfunktionstabellen, welche in der Schaltungsanordnung nach Fig. 1 jeweils in einem der acht Speicher 1 bis 8 abgespeichert sind, in aufeinanderfolgenden Speicherzonen abgespeichert sein. Die Schaltungsanordnung nach Fig. 2 arbeitet an sich genau nach dem gleichen Prinzip wie die Schaltungsanordnung nach Fig. 1, d.h. die lokale Adresse z wird aus der globalen Adresse q in acht Schritten ermittelt, welche zu den bei der Beschreibung der Funktion der Schaltungsanordnung nach Fig. 1 erläuterten acht Schritten analog sind. Auch das über die Teilfunktionen, über ihre konkrete Bestimmung sowie das über die Teiladressen bisher gesagte gilt analog für die Schaltungsanordnung nach Fig. 2. Durch die Verwendung des nur einen Speichers 10 ist es jedoch bei der Schaltungsanordnung nach Fig. 2 erforderlich, die Ergebnisse der Schritte ein bis sieben zwischenzuspeichern. Dies geschieht mittels eines verriegelbaren Zwischenspeichers 11, welcher zwischen die Datenausgänge $D_0'$ bis $D_7'$ und erste Adresseingänge $A_0'$ bis $A_7'$ des Speichers 10 geschaltet ist. Zusätzlich sind mindestens noch ein Dualzähler 12, ein weiterer, verriegelbarer Zwischenspeicher 13 sowei zwei — allgemein (n−m)/k — Schieberegister 14 und 15 erforderlich. Der Zwischenspeicher 13 ist eingangsseitig mit den Bits $E_0$ bis $E_7$, d.h. den n niederwertigsten Bits der globalen Adresse q beaufschalgt und ausgangsseitig, wie auch der Zwischenspeicher 11, mit den ersten Adresseingängen $A_0'$ bis $A_7'$ des Speichers 10 verbunden. Das Schieberegister 14 erhält an seinen Eingängen sämtliche gradzahligen und das Schieberegister 15 sämtliche ungradzahligen der übrigen (n−m) Bits der globalen Adresse q. Die Ausgänge 14.1 und 15.1 der beiden Schieberegister 14 und 15 sind auf zweite Adresseingänge $A_8'$ und $A_9'$ des Speichers 10 geschaltet. An dritten Adresseingängen $A_{10}'$, $A_{11}'$, $A_{12}'$ des Speichers 10 liegen die Zählausgänge 12.1, 12.2 und 12.3 des Dualzählers 12 an. Der Dualzähler muss mindestens k verschiedene Zahlen darstellen können, d.h. er muss mindestens ein $[\log_2 k]$-Bit-Zähler sein. Zur Steuerung der vorgenannten Komponenten weist die Schaltungsanordnung nach Fig. 2 noch eine Takt- und Steuerlogik auf. Diese besteht aus ODER-Gattern 16 und 17, einem UND-Gatter 18, NICHT-UND-Gatter 19 NICHT-ODER-Gattern 20 und 21, Invertern 22 und 23 sowie Steuerleitungen 24 bis 35. Auf das ODER-Gatter 16 sind eingangsseitig die Zählausgänge 12.1, 12.2 und 12.3 des Dualzählers 12 geschaltet. Ausgangsseitig führt vom ODER-Gatter 16 die Steuerleitung 24 zu einem der Eingänge des ODER-Gatters 17, zum Inverter 22 sowie zu einem Eingang 13.1 des Zwischenspeichers 13. Vom Inverter 22 führt ausgangsseitig eine sich verzweigende Steuerleitung zu einem Eingang 13.2 des Zwischenspeichers 13 sowie zu einem Eingang 11.1 des Zwischenspeichers 11. An den Ausgang des ODER-Gatters 17 ist eine sich verzweigende, zu Eingängen 14.2 und 15.2 der Schieberegister 14 und 15 führende Steuerleitung 26 angeschlossen. Zu einem als Rücksetzeingang dienenden Eingang 12.4 des Dualzählers 12 führt eine Steuerleitung 27 und zu einem Takteingang 12.5 dieses Zählers 12 eine Steuerleitung 28. Letztere ist darüber hinaus auf einen der Eingänge des UND-Gatters 18 geschaltet. Ein zweiter Eingang dieses UND-Gatters 18 ist mit einer Steuerleitung 29 beaufschlagt, welche an den Ausgang des NICHT-UND-Gatters 19 angeschlossen ist und welche über entsprechende Verzweigungen noch zu einem Ladeeingang 12.6 des Dualzählers 12 sowie auf einen der Eingänge des NICHT-ODER-Gatters 21 führt. Auf einen zweiten Eingang dieses Gatters 21 sind über das NICHT-ODER-Gatter 20 sowie die Steuerleitung 30 die Datenausgänge $D_0'$ bis $D_7'$ des Speichers 10

geschaltet. Vom Ausgang des UND-Gatters 18 führt die Steuerleitung 31 über entsprechende Verzeigungen jeweils zu Takteingängen 11.2, 14.3 und 15.3 des Zwischenspeichers 11 sowie der Schieberegister 14 und 15 sowie auf den Eingang des Inverters 23. Dessen Ausgang ist über eine Steuerleitung 32 mit einem zweiten Eingang des ODER-Gatters 10 verbunden. Schliesslich bleibt noch zu erwähnen, dass das NICHT-UND-Gatter 19 eingangsseitig über die Steuerleitungen 33, 34 and 35 mit den Zählausgängen 12.1, 12.2 und 12.3 des Dualzählers 12 verbunden ist und der Ausgang des NICHT-ODER-Gatters 21 auf eine Signalleitung 36 führt.

Wie bereits erwähnt, wird auch bei der Schaltungsanordnung nah Fig. 2 eine Transformation in acht — allgemein in $k$ — Schritten ausgeführt. Der erste Schritt wird dadurch eingeleitet, dass der Dualzähler 12 auf einen Zählerstand von Null gesetzt wird, was beispielsweise mittels eines Impulses über die Steuerleitung 27 auf seinen Rücksetzeingang 11.4 erfolgen kann. Der Zählerstand von Null wird über das ODER-Gatter 16 in beispielsweise einen "niedrigen" Signalpegel auf der Steuerleitung 24 umgesetzt. Dieser "niedrige" Signalpegel bewirkt dann über den Eingang 13.1 des Zwischenspeichers 13, dass die Bits $E_0$ bis $E_7$ der globalen Adresse $q$ in den Zwischenspeicher 13 übernommen werden. Der "niedrige" Signalpegel, der auch auf der Steuerleitung 26 vorherrscht, bewirkt weiter über die Eingänge 14.2 und 15.2 der Schieberegister 14 und 15, dass die Bits $E_8$ bis $E_{12}$ in diese übernommen werden, wobei die gradzahligen Bits in das Schieberegister 14 und die ungradzahligen Bits in das Schieberegister 15 geladen werden. Dadurch dass über den Inverter 22 und die Steuerleitung 25 gleichzeitig ein zum "niedrigen" Signalpegel inverser "hoher" Signalpegel am Eingang 13.2 des Zwischenspeichers 13 anliegt, sind die Bits $E_0$ bis $E_7$ auch gleich auf seine Ausgänge durchgeschaltet und liegen an den ersten Adresseingängen $A'_0$ bis $A'_7$ des Speichers 10 an. Der Zwischenspeicher 13 ist daher während des ersten Schrittes ausgangsseitig entriegelt, während der Zwischenspeicher 11, an dessen Eingang 11.2 während des ersten Schrittes ein "niedriger" Signalpegel anlieft, ausgangsseitig verriegelt ist. An den Ausgängen 14.1 und 15.1 der Schieberegister 14 und 15 erscheinen unmittelbar die in der Reihenfolge geladenen Bits jeweils niederwertigsten $E_8$ und $E_9$, welche dann auch an den zweiten Adresseingängen $A'_8$ und $A'_9$ des Speichers 10 anliegen. Die Bits $E_0$ bis $E_9$ bilden, wie bei der Schaltungsanordnung nach Fig. 1, die Teiladresse $q^{(1)}$. Ueber die mit dem Dualzähler 12 verbundenen Adresseingänge $A'_{10}$, $A'_{11}$ und $A'_{12}$, an denen, wie angenommen zunächst Null anliegen soll, wird eine erste Speicherzone im Speicher 10 adressiert, welche diejenige Teilfunktion enthalten soll, welche im Beispiel von Fig. 1 im Speicher 1 enthalten ist. Ueber die Adresseingänge $A'_0$ bis $A'_9$ wird innerhalb dieser Speicherzone die gleiche Speicherzelle adressiert, wie im Beispiel von Fig. 1 im Speicher 1, deren Inhalt als Ergebnis des ersten Schrittes an den Datenausgängen $D_0$ bis $D_7$ des Speichers 10 erscheint.

Der zweite Schritt wird durch einen Taktimpuls auf der Steuerleitung 28 eingeleitet, welcher ausser auf den Takteingang 12.5 des Zählers 12 über die Steuerleitung 31 auch auf die Eingänge 11.2 des Zwischenspeichers 11, 14.3 des Schieberegister 14 und 15.3 des Schieberegisters 15 gelangt. Am Dualzähler 12 bewirkt der Takt eine Inkrementierung, wodurch im Speicher 10 ein zweite Speicherzone adressiert wird, welche die Teilfunktion enthalten soll, welche im Beispiel von Fig. 1 in Speicher 2 enthalten ist. Auf den Steuerleitungen 24 und 26 wechselt der Signalpegel von "niedrig" auf "hoch" und umgekehrt auf der Steuerleitung 25 der Signalpegel von "hoch" nach "niedrig". Dies hat zur Folge, dass die Schieberegister 14 und 15 über ihre Eingänge 14.2 und 15.2 von "Laden" auf "Schieben" geschaltet werden, der Zwischenspeicher 13 über seinen Eingang 13.2 ausgangsseitig verriegelt und der Zwischenspeicher 11 über seinen Eingang 11.2 zur Aufnahme des Ergebnisses des ersten Schrittes bereitgeschaltet wird. Dieses Ergebnis ist dann auch gleich auf die ersten Adresseingänge $A'_0$ bis $A'_7$ des Speichers 10 durchgeschaltet. Der Inhalt des Schieberegisters 14 und 15 wird durch den Takt jeweils um eine Position verschoben, so dass an ihren Ausgängen 14.1 und 15.1 die Bits $E_{10}$ und $E_{11}$ erscheinen, welche zusammen, wie bei der Schaltungsanordnung nach Fig. 1, die Teiladresse $q^{(2)}$ bilden. Ueber die nunmehr an den Adresseingängen $A'_0$ bis $A'_9$ des Speichers 10 anliegenden Bits wird innherhalb der vom Dualzähler 12 adressierten Speicherzone eine Speicherzelle ausgewählt, welche der in der Schaltungsanordnung nach Fig. 1 im zweiten Schritt ausgewählten Speicherzelle im Speicher 2 entspricht. Ihr Inhalt erscheint als Ergebnis des zweiten Schrittes an den Datenausgängen $D'_0$ bis $D'_7$ des Speichers 10.

Die Schritte 3 bis 8 sind analog zum zweiten Schritt. Am Ende des achten Schrittes erscheint an den Datenausgängen $D'_0$ bis $D'_7$ des Speichers 10 die gewünschte lokale Adresse $z$. Die Gatter 18, 19, 20 sowie 21 dienen im wesentlichen dazu, das Erreichen des achten Schrittes festzustellen, die Transformation zu beenden und dieses auf der Signalleitung 36 (wie auch auf der Steuerleitung 29) zu signalisieren.

**Patentansprüche**

1. Schaltungsanordnung zur Transformation von $2^n$ in einem Leittechniksystem mit mehreren Teilnehmern verwendeten globalen Adressen in $2^m$ in einem der Teilnehmer des Systems verwendete lokale Adressen unter Verwendung einer in Abhängigkeit von Teiladressen $q^{(j)}$, $j = 1, \ldots k$, in Teilfunktionen $w_j$, $j = 1, \ldots k$, zerlegten Transformationsfunktion $w$, dadurch gekennzeichnet,

dass $k$ Speicher (1, $\ldots$, 8) vorgesehen sind mit $m$ ersten ($A_0, \ldots, A_7$) und $(n-m)/k$ zweiten Adresseingängen ($A_8, A_9$) und mindestens $m$ Datenausgängen ($D_0, \ldots D_7$), wobei $n > m$ und $k = (n-m)/2$,

dass die Speicher (1, $\ldots$, 8) derart hintereinander geschaltet sind, dass bis auf den in der Reihenfolge letzten Speicher (8) ihre m Datenausgänge ($D_0, \ldots, D_7$) an die m ersten Adresseingänge ($A_0, \ldots A_7$) ihrer jeweiligen Nachfolger angeschlossen sind,

das (m + (n−m)/k) Bit ($E_0$ bis $E_9$) einer globalen Adresse q an entsprechend vielen Adresseingängen ($A_0$ bis $A_9$) des in der Reihenfolge ersten Speichers (1) angeschlossen sind,

dass jeweils (n−m)/k jeweils weitere Bit ($E_{10}$, $E_{11}$, bzw. $E_{12}$, $E_{13}$, bzw. ... bzw. $E_{22}$, $E_{23}$) der globalen Adresse q an entsprechend vielen zweiten Adresseingängen ($A_8$, $A_9$) der übrigen Speicher (2 bis 8) angeschlossen sind,

dass die Speicher (1 bis 8) die diskreten Teilfunktionen $w_j$ enthalten, welche derart bestimmt sind, dass die Beziehung

$$w(q) = w_k (q^{(k)}, w_{k-1}(q^{(k-1)}, \ldots, w_1(q^{(1)}) \ldots))$$

gilt, wobei die $q^{(j)}$ Teiladressen der globalen Adresse q sind, für welche die Beziehung

$$q^{(j)} = (q \bmod p_j) \operatorname{div} p_{j-1}$$

gilt, wobei

$$P_j = \prod_{a=1}^{j} 2^{s_a},$$

$$P_0 = 1$$

$$s_1 = (m + (n-m)/k),$$

$$s_2 = s_3 = \ldots = s_k = (n-m)/k \text{ sind und}$$

"mod" die Modulo-Funktion und
"div" die ganzzahlige Division bedeuten.

2. Schaltungsanordnung zur Transformation von $2^n$ in einem Leittechniksystem mit mehreren Teilnehmern verwendeten globalen Adressen in $2^m$ in einem der Teilnehmer des Systems verwendete lokale Adressen unter Verwendung einer in Abhängigkeit von Teiladressen $q^{(j)}$, j = 1, ..., k, in Teilfunktionen $w_j$, j = 1, ..., k, zerlegten Transformationsfunktion w, dadurch gekennzeichnet,

dass zu einem ersten Zeitpunkt m Bit ($E_0$ bis $E_7$) einer globalen Adresse q auf m erste Adresseingänge ($A_{0'}$ bis $A_{7'}$) eines Speichers (10) schaltbar sind,

dass zu k−1 weiteren Zeitpunkten die binären Zustande von m Datenausgängen ($D_{0'}$ bis $D_{7'}$) des Speichers (10), welche diese in den jeweils vorausgegangenen Zeitpunkten angenommen haben, auf seine m ersten Adresseingänge ($A_{0'}$ bis $A_{7'}$) rückführbar sind,

dass zu allen k Zeitpunkten jeweils (n−m)/k jeweils weitere Bit ($E_8$, $E_9$ bzw. $E_9$, $E_{10}$ bzw. ... bzw. $E_{22}$, $E_{23}$) der globalen Adresse q an entsprechend viele zweite Adresseingänge ($A_{8'}$, $A_{9'}$) des Speichers (10) anlegbar sind, wobei n > m und k = (n−m)/2,

dass ein an $[\log_2 k]$ dritte Adresseingänge ($A_{10'}$, $A_{11'}$, $A_{12'}$) des Speichers (10) angeschlossener, mindestens $[\log_2 k]$-Bit Dualzähler (12) vorgesehen ist,

dass der Speicher (10) in k Speicherzonen die Teilfunktionen $w_j$ enthält, welche derart bestimmt sind, dass die Beziehung

$$w(q) = w_k (q^{(k)}, w_{k-1}(q^{(k-1)}, \ldots, w_1(q^{(1)}) \ldots))$$

gilt, wobei die $q^{(j)}$ Teiladressen der globalen Adresse q sind, für welche die Beziehung

$$q^{(j)} = (q \bmod p_j) \operatorname{div} p_{j-1}$$

gilt, wobei

$$P_j = \prod_{a=1}^{j} 2^{s_a},$$

$$P_0 = 1$$

$$s_1 = (m + (n-m)/k),$$

$$s_2 = s_3 = \ldots = s_k = (n-m)/k \text{ sind und}$$

"mod" die Modulo-Funktion und
"div" die ganzzahlige Division bedeuten,

dass durch den Dualzähler (12) über die dritten Adresseingänge ($A_{10'}$, $A_{11'}$, $A_{12'}$) die k Speicherzonen zu den k Zeitpunkten aufeinanderfolgend adressierbar sind, und

dass die Funktionswerte der Teilfunktion in der zuletzt adressierbaren Speicherzone die lokalen Adressen sind.

3. Schaltungsanordnung nach Anspruch 1, dadurch gekennzeichnet, dass die am in der Reihenfolge ersten der k Speicher (1) angeschlossen (m + (n−m)/k) Bit ($E_0$ bis $E_9$) der globalen Adresse q die Teiladresse $q^{(1)}$ und die an den zweiten Adresseingängen der übrigen Speicher angeschlossenen jeweils (n−m)/k Bit ($E_{10}$, $E_{11}$ bzw. $E_{12}$, $E_{13}$ bzw. . . . bzw. $E_{22}$, $E_{23}$) der globalen Adresse q die Teiladressen $q^{(2)}$ bis $q^{(k)}$ bilden.

4. Schaltungsanordnung nach Anspruch 2, dadurch gekennzeichnet, dass die zum ersten Zeitpunkt an den ersten ($A_{0'}$ bis $A_{7'}$) und zweiten Adresseingängen ($A_{8'}$, $A_{9'}$) des Speichers (10) anliegenden, insgesamt (m + (n−m)/k) Bit ($E_0$ bis $E_9$) der globalen Adresse q die Teiladresse $q^{(1)}$ und die zu den folgenden k−1 Zeitpunkten an den zweiten Adresseingängen ($A_{8'}$, $A_{9'}$) anliegenden, jeweils (n−m)/k Bit ($E_{10}$, $E_{11}$ bzw. $E_{12}$, $E_{13}$ bzw. . . . bzw. $E_{22}$, $E_{23}$) der globalen Adresse q die Teiladressen $q^{(2)}$ bis $q^{(k)}$ bilden.

5. Schaltungsanordnung nach einem der Ansprüche 1 bis 4, dadurch gekennzeichnet, dass die ersten Adresseingänge ($A_0$ bis $A_7$ bzw. $A_{0'}$ bis $A_{7'}$) die niederwertigeren und die zweiten Adresseingänge ($A_8$, $A_9$ bzw. $A_{8'}$, $A_{9'}$) die höherwertigeren sind.

6. Schaltungsanordnung nach Anspruch 2, dadurch gekennzeichnet, dass die m Bit ($E_0$ bis $E_7$) der globalen Adresse q zu ersten Zeitpunkt über einen ersten verriegelbaren Zwischenspeicher (13) auf die m ersten Adresseingänge ($A_{0'}$ bis $A_{7'}$) des Speichers (10) schaltbar sind und dass ein zweiter, zwischen diese m Adresseingänge ($A_{0'}$ bis $A_{7'}$) und die m Datenausgänge ($D_{0'}$ bis $D_{7'}$) geschalteter, ebenfalls verriegelbarer Zwischenspeicher (11) zu diesem Zeitpunkt verriegelt ist.

7. Schaltungsanordnung nach Anspruch 6, dadurch gekennzeichnet, dass zu den k−1 weiteren Zeitpunkten die binären Zustände der m Datenausgänge ($D_{0'}$ bis $D_{7'}$) des Speichers (10), welche diese in den jeweils vorausgegangenen Zeitpunkten angenommen haben, über den zweiten Zwischenspeicher (11) auf seine m ersten Adresseingänge ($A_{0'}$ bis $A_{7'}$) rückführbar sind, und dass zu diesen Zeitpunkten der erste Zwischenspeicher (13) verriegelt ist.

8. Schaltungsanordnung nach Anspruch 2, dadurch gekennzeichnet, dass (n−m)/k Schieberegister (14, 15) vorgesehen sind, wobei über die einzelnen Schieberegister (14, 15) zu den k Zeitpunkten jeweils eines der (n−m)/k jeweils weiteren Bits ($E_8$ bis $E_{22}$) der globalen Adresse (q) an die zweiten Adresseingänge ($A_{8'}$, $A_{9'}$) des Speichers (10) gelangt.

**Revendications**

1. Montage de circuit pour la transformation de $2^n$ adresses globales utilisées dans un système de bus à plusieurs utilisateurs en $2^m$ adresses locales utilisées dans un des utilisateurs du système en utilisant une fonction de transformation w décomposée en fonctions partielles $w_{(j)}$, j = 1, . . ., k, en fonction d'adresses partielles $q^{(j)}$, j = 1, . . ., k, caractérisé en ce

que sont prévues k mémoires (1, . . ., 8) présentant m premières entrées d'adresses ($A_0$, . . ., $A_7$) et (n−m)/k secondes entrées d'adresses ($A_8$, $A_9$), ainsi qu'au moins m sorties de données ($D_0$, . . ., $D_7$), où n > m et k = (n−m)/2,

que les mémoires (1, . . ., 8) sont connectées en une succession telle que, sauf pour ce qui concerne la dernière mémoire (8) dans l'ordre de succession, leurs m sorties de données ($D_0$, . . ., $D_7$) sont chaque fois connectées aux m premières entrées d'adresses ($A_0$ . . ., $A_7$) de leur successeur respectif,

que (m + (n−m)/k bits ($E_0$ à $E_9$) d'une adresse globale q sont connectés à un nombre correspondant d'entrées d'adresses ($A_0$ à $A_9$) de la première mémoire (1) dans l'ordre de succession,

que les (n−m)/k bits chaque fois suivants ($E_{10}$, $E_{11}$ ou $E_{12}$, $E_{13}$, ou . . . $E_{22}$, $E_{23}$) de l'adresse globale q sont chaque fois connectés à un nombre correspondant de secondes entrées d'adresses ($A_8$, $A_9$) des autres mémoires (2 à 8),

que les mémoires (1 à 8) contiennent les fonctions partielles discrètes $w_j$ qui sont déterminées de manière à respecter la relation:

$$w(q) = w_k (q^{(k)}, w_{k-1}(q^{(k-1)}, \ldots, w_1(q^{(1)}) \ldots))$$

où les $q^{(j)}$ sont des adresses partielles de l'adresse globale q qui respectent la relation:

$$q^{(j)} = (q \bmod p_j) \operatorname{div} p_{j-1}$$

où

$$P_j = \prod_{a=1}^{j} 2^{s_a}$$

$$P_0 = 1$$

$$s_1 = (m + (n-m)/k),$$

$$s_2 = s_3 = \ldots = s_k = (n-m)/k$$

et où

"mod" signifie la fonction modulo, et "div", la division jusqu'à un nombre entier.

2. Montage de circuit pour la transformation de $2^n$ adresses globales utilisées dans un système de bus à plusieurs utilisateurs en $2^m$ adresses locales utilisées dans un des utilisateurs du système, en utilisant une fonction de transformation w décomposée en fonctions partielles $w_{(j)}$, $j = 1, \ldots, k$, en fonction d'adresses partielles $q^{(j)}$, $j = 1, \ldots, k$, caractérisé en ce

qu'à un premier moment, m bits ($E_0$ à $E_7$) d'une adresse globale q peuvent être connectés à m premières entrées d'adresses ($A'_0$ à $A'_7$) d'une mémoire 10,

qu'à $k-1$ moments suivants, les états binaires de m sorties données ($D'_0$ à $D'_7$) de la mémoire (10) que celles-ci ont adoptés chaque fois aux moments précédents, peuvent être ramenés à ses m premières entrées d'adresses ($A'_0$ à $A'_7$),

qu'à chacun des k moments, les $(n-m)/k$ bits chaque fois suivants ($E_8$, $E_9$ ou $E_9$, $E_{10}$ ou ... ou $E_{22}$, $E_{23}$) de l'adresse globale q peuvent chaque fois être applieés à un nombre correspondant de deuxièmes entrées d'adresses ($A'_8$, $A'_9$) de la mémoire (10), où $n > m$ et $k = (n-m)/2$,

qu'il est prévu un compteur binaire (12) à au moins $[\log_2 k]$ bits connecté à des troisièmes entrées d'adresses $[\log_2 k]$ ($1'_{10}$, $A'_{11}$, $A'_{12}$) de la mémoire (10),

que la mémoire (10) contient dans k zones de mémoire les fonctions partielles $w_j$ qui sont déterminées de manière à respecter la relation:

$$w(q) = w_k (q^{(k)}, w_{k-1}(q^{(k-1)}, \ldots, w_1(q^{(1)}) \ldots))$$

où les $q^{(j)}$ sont des adresses partielles de l'adresse globale q qui respectent la relation:

$$q^{(j)} = (q \bmod p_j) \operatorname{div} p_{j-1}$$

où

$$P_j = \prod_{a=1}^{j} 2^{s_a}$$

$$P_0 = 1$$

$$s_1 = (m + (n-m)/k),$$

$$s_2 = s_3 = \ldots = s_k = (n-m)/k$$

et où

"mod" signifie la fonction modulo, et "div", la division jusqu'à un nombre entier,

que le compteur binaire (12) peut, par l'intermédiair des troisièmes entrées d'adresses ($A'_{10}$, $A'_{11}$, $A'_{12}$) adresser les k zones de mémoire successivement aux k moments, et

que les valeurs de fonction des fonctions partielles dans la zone de mémoire adressable en dernier lieu sont les adresses locales.

3. Montage de circuit suivant la revendication 1, caractérisé en ce que les $(m + (n-m)/k)$ bis ($E_0$ à $E_9$) de l'adresse globale q qui sont connectés à la mémoire (1) qui est la première des k mémoires dans l'ordre de succession forment l'adresse partielle $q^{(1)}$, tandis que les $(n-m)/k$ bits ($E_{10}$, $E_{11}$ ou $E_{12}$, $E_{13}$ ou ... $E_{22}$, $E_{23}$) de l'adresse globale q qui sont connectés aux deuxièmes entrées des autres mémoires forment chaque fois les adresses partielles $q^{(2)}$ à $q^{(k)}$.

4. Montage de circuit suivant la revendication 2, caractérisé en ce que les bits appliqués au premier moment aux premières ($A'_0$ à $A'_7$) et secondes entrées d'adresses ($A'_8$, $A'_9$) de la mémoire (10), au total (m + $(n-m)/k$) bits, ($E_0$ à $E_9$) de l'adresse globale q forment l'adresse partielle $q^{(1)}$, tandis que les $(n-m)/k$ bits ($E_{10}$, $E_{11}$ ou $E_{12}$, $E_{13}$ ou ... ou $E_{22}$, $E_{23}$) de l'adresse globale q qui sont appliqués chaque fois aux deuxièmes entrées d'adresses ($A'_8$, $A'_9$) aux $k-1$ moments suivants forment les adresses partielles $q^{(2)}$ à $q^{(k)}$.

5. Montage de circuit suivant l'une quelconque des revendications 1 à 4, caractérisé en ce que les premières entrées d'adresses (A₀ à A₇ ou A′₀ à A′₇) sont les moins significatives et les deuxièmes entrées d'adresses (A₈, A₉ ou A′₈, A′₉) sont les plus significatives.

6. Montage de circuit suivant la revendication 2, caractérisé en ce que les m bits (E₀ à E₇) de l'adresse globale q peuvent, au premier moment, être connectés, par l'intermédiaire d'une première memoire-tampon verrouillable (13), aux m premières entrées d'adresses (A′₀ à A′₇) de la mémoire (10) et qu'une seconde mémoire-tampon (11) également verrouillable, qui est connectée entre ces m entrées d'adresses (A′₀ à A′₇) et les m sorties de données (D′₀ à D′₇) est verrouillée à ce moment.

7. Montage de circuit suivant la revendication 6, caractérisé en ce qu'aux k−1 moments suivants, les états binaires des m sorties de données (D′₀ à D′₇) de la mémoire (10), que celles-ci ont adoptés aux moments précédents respectifs peuvent être ramenés, par l'intermédiaire de la seconde mémoire-tampon (11), à ses m premières entrées d'adresses (A′₀ à A′₇) et qu'à ces moments, la première mémoire-tampon (13) est verrouillée.

8. Montage de circuit suivant la revendication 2, caractérisé en ce que sont prévus (n−m)/k registres à décalage (14, 15) par l'intermédiaire de chacun desquels (14, 15), aux k moments, chaque fois un des (n−m)/k bits (E₈ à E₂₂) chaque fois suivants de l'adresse globale (q) parvient aux deuxièmes entrées d'adresses (A′₈, A′₉) de la mémoire (10).

**Claims**

1. Circuit arrangement for transforming $2^n$ global addresses used in a control engineering system comprising several users into $2^m$ local addresses used in one of the users of the system, using a transformation function w which is split according to subaddresses $q^{(j)}$, $j = 1, \ldots, k$, into subfunctions $w_j$, $j = 1, \ldots, k$, characterized in — that k memories $(1, \ldots, 8)$ are provided with m first $(A_0, \ldots, A_7)$ and $(n-m)/k$ second address inputs $(A_8, A_9)$ and at least m data outputs $(D_0, \ldots, D_7)$, where $n > m$ and $k = (n-m)/2$,

that the memories $(1, \ldots, 8)$ are connected in series in such a manner that, apart from the last memory (8) in the sequence, their m data outputs $(D_0, \ldots, D_7)$ are connected to the m first address inputs $(A_0, \ldots, A_7)$ of their corresponding followers,

that $(m + (n-m)/k)$ bits $(E_0$ to $E_9)$ of a global address q are connected to a corresponding number of address inputs $(A_0$ to $A_9)$ of the memory (1) which is the first in the sequence,

that in each case $(n-m)/k$ of in each case further bits $(E_{10}, E_{11},$ and $E_{12}, E_{13},$ and $\ldots E_{22}, E_{23})$ of the global address q are connected to a corresponding number of second address inputs $(A_8, A_9)$ of the other memories (2 to 8),

that the memories (1 to 8) contain the discrete subfunctions $w_j$ which are determined in such a manner that the relation

$$w(q) = w_k{}^{(q(k)}, w_{k-1}(q^{(k-1)}, \ldots, w_1(q^{(1)}) \ldots))$$

holds true, where the $q^{(j)}$ are subaddresses of the global address q for which the relation

$$q^{(j)} = (q \bmod p_j) \operatorname{div} p_j{-}1$$

holds true, where

$$P_j = \prod_{a\,=\,1}^{j} 2^{s_a}$$
$$P_0 = 1$$

$$s_1 = (m + (n-m)/k),$$

$$s_2 = s_3 = \ldots = s_k = (n-m)/k$$

and
"mod" is the modulo function and
"div" is the integral division,

2. Circuit arrangement for transforming $2^n$ global addresses used in a control engineering system having several users into 2m local addresses used in one of the users of the system, using a transformation function w which is split according to subaddresses $q^{(j)}$, $j = 1, \ldots, k$, into subfunctions $w_{(j)}$, $j = 1, \ldots, k$, characterized in

that at a first time m bits $(E_0$ to $E_7)$ of a global address q can be connected to m first address inputs $A_{0'}$ [sic] to $A_{7'}$ of a memory (10),

that at k−1 further times, the binary states of m data ouputs $[D_{0'}$ [sic] to $D_{7'}$ [sic] of the memory (10), which have been assumed by these outputs at the times preceding in each case, can be fed back to its m first address inputs $A_{0'}$ [sic] to $A_{7'}$ [sic],

that at all k times, in each case $(n-m)/k$ in each case further bits $(E_8, E_9$ and $E_9, E_{10}$ and $\ldots E_{22}, E_{23})$ of the

global address q can be applied to a corresponding number of second address inputs ($A_8$, [sic], $A_9$, [sic]) of the memory (10), where $n > m$ and $k = (n-m)/2$,

that an at least [$\log_2 k$] bit binary counter (12) is provided which is connected to [$\log_2 k$] third address inputs ($A_{10}$, [sic], $A_{11}$, [sic], $A_{12}$, [sic]) of the memory (10),

that the memory (10) contains in k storage zones subfunctions $w_j$ which are determined in such a manner that the relation

$$w(q) = w_k(q^{(k)}, w_{k-1}(q^{(k-1)}, \ldots, w_1(q^{(1)}) \ldots))$$

holds true, where the $q^{(j)}$ are subaddresses of the global address q for which the relation

$$q^{(j)} = (q \bmod p_j) \operatorname{div} p_j-1$$

holds true, where

$$P_j = \prod_{a=1}^{j} 2^{s_a}$$
$$P_0 = 1$$

$$s_1 = (m + (n-m)/k),$$

$$s_2 = s_3 = \ldots = s_k = (n-m)/k$$

and

"mod" is the modulo function and
"div" is the integral division,

that the k storage zones can be successively addressed at k times by the binary counter (12) via the third address inputs $A_{10}$, [sic], $A_{11}$, [sic], $A_{12}$, [sic]) and

that the function values of the subfunction in the storage zone last addressable are the local addresses.

3. Circuit arrangement according to Claim 1, characterized in that the ( $m+ (n-m)/k$) bits ($E_0$ to $E_9$) of the global address q, connected to the memory (1) which is the first memory of the k memories in the sequence, form the subaddress $q^{(1)}$ and the in each case $(n-m)/k$ bits ($E_{10}$, $E_{11}$ and $E_{12}$, $E_{13}$ and . . . and $E_{22}$, $E_{23}$) of the global address q, connected to the second address inputs of the other memories, form the subaddresses $q^{(2)}$ to $q^{(k)}$.

4. Circuit arrangement according to Claim 2, characterized in that the total number of $m + (n-m)/k$ bits ($E_0$ to $E_9$) of the global address q, present at the first ($A_0$, [sic] $A_7$, [sic]) and second address inputs ($A_8$, [sic], $A_9$, [sic]) of the memory (10) at the first time form subaddress $q^{(1)}$ and the in each case $(n-m)/k$ bits ($E_{10}$, $E_{11}$, and $E_{12}$, $E_{13}$ and . . . and $E_{22}$, $E_{23}$) of the global address q, present at the second address inputs ($A_8$, [sic], $A_9$, [sic]) at the subsequent $k-1$ times, form subaddresses $q^{(2)}$ to $q^{(k)}$.

5. Circuit arrangement according to one of Claims 1 to 4, characterized in that the first address inputs ($A_0$ to $A_7$ and $A_9$, [sic], to $A_7$, [sic]) are the least significant inputs and the second address inputs ($A_8$, $A_9$ and $A_8$, [sic], $A_9$, [sic]) are the most significant inputs.

6. Circuit arrangement according to Claim 2, characterized in that the m bits ($E_0$ to $E_7$) of the global address q can be switched the first time via a first latchable temporary memory (13) to the m first address inputs ($A_0$, [sic] to $A_7$, [sic]) of the memory (10) and that a second temporary memory (11) which is connected between these m address inputs ($A_0$, [sic] to $A_7$, [sic]) and the m data outputs ($D_0$, [sic] to $D_7$, [sic]) and which is also latchable at this time.

7. Circuit arrangement according to Claim 6, characterized in that at the $k-1$ further times, the binary states of the m data outputs ($D_0$, [sic] to $D_7$, [sic]) of the memory (10), which have been assumed by the latter at the times preceding in each case, can be fed back via the second temporary memory (11) to its m first address inputs ($A_0$, [sic] to $A_7$, [sic]) and that the first temporary memory (13) is latched at these times.

8. Circuit arrangement according to Claim 2, characterized in that $(n-m)/k$ shift registers (14, 15) are provided, in which arrangement in each case one of the $(n-m)/k$ in each case further bits ($E_8$ to $E_{22}$) of the global address (q) passes via the individual shift registers (14, 15) to the second address inputs ($A_8$, [sic], $A_9$, [sic]) of the memory (10) at the k times.

FIG.1

FIG. 2